# EUROPEAN PATENT SPECIFICATION

(11) **EP 3 461 718 B1**
(45) Date of publication and mention of the grant of the patent: **01.06.2022**
(21) Application number: 18188608.6
(22) Date of filing: 13.08.2018
(51) Int. Cl.: B62B 3/00

(54) **CONTAINER**
BEHÄLTER
CONTENEUR

(30) Priority: 22.09.2017 FI 20175843
(43) Date of publication of application: 03.04.2019
(73) Proprietor: K. Hartwall Oy AB, 01150 Söderkulla (FI)
(72) Inventor: JÄRVI, Mikko, 01150 Söderkulla (FI); RANINEN, Jussi, 01150 Söderkulla (FI); TUOMOLA, Teo, 01150 Söderkulla (FI)
(74) Representative: Laine IP Oy

(56) References cited:
- EP-A2- 2 942 260
- DE-A1- 2 021 914
- DE-B3-102006 034 888
- GB-A- 2 534 263
- US-A- 4 222 579
- US-A- 5 161 709
- US-A1- 2016 082 996

## Description

### FIELD

The present disclosure relates to the field of logistics equipment for transporting particularly parcelled goods.

### BACKGROUND

Logistics equipment, such as roll containers, cages, pallets, etc., are designed to be user-friendly, robust, and reliable. As the logistics field grows ever more environmentally conscious, lightness has become an important factor in reducing the carbon footprint of transport. Let us take doors as an example. It is self-evident that doors must be sturdy enough to withstand repetitive and long-term abuse. The challenge is to achieve the necessary robustness, usability, and lightness all at once. <insert page 1a>

### SUMMARY

A proposed alternative to the existing containers includes a novel container which features two restraint mechanisms for securing the door to the enclosure. Firstly, a translation restraint mechanism has a first counterpart which is provided to an extension of the door, and another cooperating counterpart which provided to the enclosure. The translation restraint mechanism prevents the extension of the door from moving in a direction perpendicular to the articulation axis of the extension. Secondly, a releasable rotation restraint mechanism engages the extension of the door prevents the rotation of the extension about the articulation axis.

More specifically, the invention is defined by the independent claim.

Considerable benefits are gained by virtue of the novel proposition. The distinct mechanisms for restraining different degrees of freedom enable the use of fixed sturdy elements for assuming great forces and the use of a releasable moving mechanism to simply keep the door in a secured position. Accordingly, the parts of the container that are to withstand great forces may be made from heavy duty materials whereas other parts may be made of light-weight materials thus maintaining usability and robustness while keeping the weight of the container low.

GB2534263A discloses a rolling container provided with a closure. The rolling container comprises a frame provided with wheels, a first locking element arranged in or on the frame, a door element provided pivotally or removably relative to the frame, a closing mechanism arranged in or on the frame and comprising an operating handle and a first hook-like element, a connecting element arranged in or on the door element for movement relative thereto and provided with a second hook-like element and a second locking element. The operating handle is switchable between a closed state and an open state by rotating the operating handle such that the first and second hook-like elements are movable relative to each other and in the closed state are in engagement at a first closing position. During movement of the operating handle to a closed state the second locking element engages in or on the first locking element at a second closing position.

Further benefits are described in connection with specific embodiments.

### BRIEF DESCRIPTION OF THE DRAWINGS

Certain exemplary embodiments are hereafter described with reference to the accompanying drawings in which
- FIGURE 1: illustrates a perspective view of a container in accordance with at least some embodiments of the present invention with the door in a closed state;
- FIGURE 2: illustrates a detail view of area A of FIGURE 1;
- FIGURE 3: illustrates the extension of the door of FIGURE 2 in a released state;
- FIGURE 4: illustrates a perspective view of the container of FIGURE 1 with the top panel in an opened state;
- FIGURE 5: illustrates a detail view of area B of FIGURE 4;
- FIGURE 6: illustrates a detail view of area C of FIGURE 4;
- FIGURE 7: illustrates a side view of the container of FIGURE 1;
- FIGURE 8: illustrates a detail view of area D of FIGURE 7, and
- FIGURE 9: illustrates the rotation restraint mechanism of FIGURE 8 in a released state.

### EMBODIMENTS

In essence, the disclosed exemplary solutions make use of two restraint mechanisms for securing the door to the enclosure of a container. Firstly, a translation restraint mechanism has a first counterpart provided to an extension of the door and another cooperating counterpart provided to the enclosure. The releasable translation restraint mechanism prevents the extension of the door from moving in a direction perpendicular to the articulation axis of the extension. Secondly, a releasable rotation restraint mechanism engages the extension of the door prevents the rotation of the extension about the articulation axis. Now, considering the practical aspects of the field it should be clear that axes and their respective and mutual dimensions are not be construed as utterly precise mathematical relationships but rather approximate determination including, for example, reasonable tolerances employed in the field as long as the function in question is achieved.

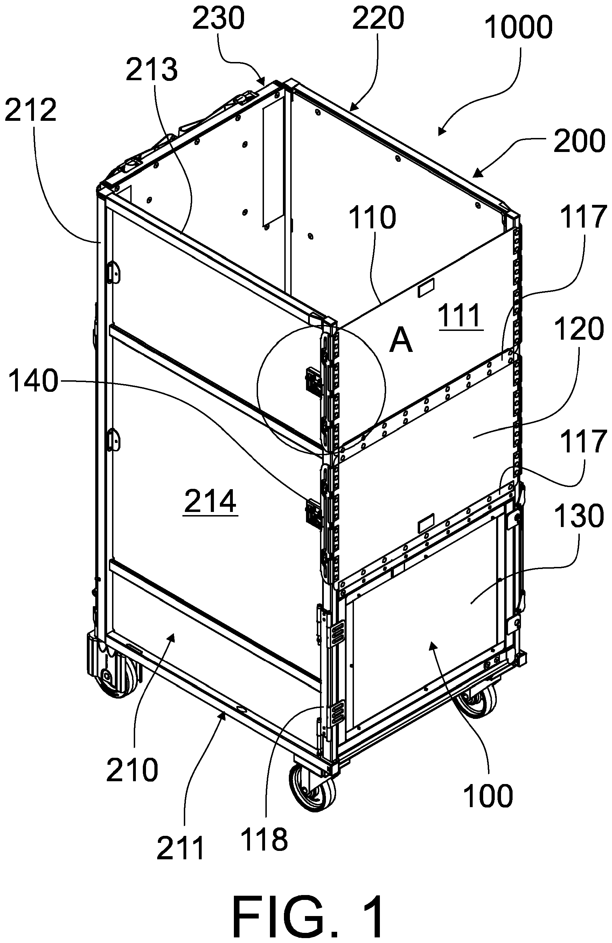

FIGURE 1 illustrates a container 1000 benefitting from such an arrangement in greater detail and in accordance with at least some embodiments of the present invention. The illustrated container 1000 is a hand or machine propelled roll container but the disclosed principles apply also to other logistics equipment including cages, walled pallets, crates, etc. According to one embodiment, the container 1000 is a logistics container, preferably a roll container. The container 1000 includes an enclosure 200 which in the illustrated example has three closed sides and one open side, namely the front side. Alternatively the enclosure 200 could have only two closed sides leaving the front and rear open. Also, the enclosure could only have three lateral ends, i.e. have a triangular shape when viewed from above or below. Two of these lateral ends would be covered by walls, whereas one would be open. The generally prismatic option is, however, most foreseeable and therefore illustrated in the FIGURES. Accordingly, the enclosure 200 according to the illustrated embodiment includes three walls, namely the first wall 210, the second wall 220 opposing the first wall 210 at a distance, and a third wall 230 connecting the first wall 210 and second wall 220. In other words, the enclosure 200 features four lateral ends. The distance between the first and second wall 210, 220 defines the width of the open end of the enclosure 200. The walls 210, 220, 230 are also connected at the bottom by the chassis to which the wheels are fitted.

Generally speaking, the enclosure 200 is generally prismatic and comprises a first wall 210 and a second wall 220 spaced apart from the first wall 210 creating the open end of the enclosure 200 there between. In the closed state, the door 100 extends across the distance between said at first and second wall 210, 220. In the open state, the door 100 is in an angled orientation in respect to the closed state, such as angled about a vertical hinge axis.

The walls 210, 220, 230 define a substantially prismatic shape for the enclosure 200. The walls 210, 220, 230 are preferably constructed as light as possible. In the illustrated example the walls 210, 220, 230 are made up by a sturdy metal or plastic beam frame 211 and by a light cover 214 being supported by the frame 211. The frame 211 includes vertical elements 212 which may be hollow profiles made from metal, plastic, or a suitable extruded and load resisting material. The frame 211 also includes similar but transverse horizontal elements 213 connecting the vertical elements 212 so as to form the quadrilateral wall 210, 220, 230. The cover 214 may be a plastic, composite, cardboard, mesh, or similar sheet which is connected to the frame 211 by means of brackets, for example. The material of the cover 214 may be selected for a particular use so as to avoid adding unnecessary weight to the container 1000 without compromising containment abilities.

In addition to the enclosure 200, the second main component of the container 1000 is the door 100. In the illustrated example, the container 1000 comprises one door 100 provided between the sole open end of the container 1000 defined by the distance between the first and second wall 210, 220. Naturally, the rear wall, i.e. the third wall 230, could be replaced with a door as well. The door 100 may be a conventional "one-piece" door or a sequentially operated door as shown in the FIGURES. The sequenced door 100 may include two or more horizontally hinged panels. The example shown in the FIGURES includes three panels, namely the first panel 110 at the top, a second panel 120 in the middle, and a third panel 130 at the bottom. Starting from the bottom, the third panel 130 is connected to the enclosure 200 through a vertical hinge 118. More generally speaking, the door 100 is movably connected to the enclosure 200 through a vertical hinge 118. In the shown example the vertical hinge 118 is a double hinge with a limited vertical translation action to allow locking against a holder on the side wall of the container (not shown in the FIGURES). The third panel 130 carries the weight of the other two panels and is likely to be subjected to more impacts than the panels above it. For these reasons the third panel 130 may be constructed as a metal or composite element to withstand the pronounced strain.

As mentioned above, the door 100 includes two panels connected successively to the third panel 130. While it is optional to include more than one panel to the door, it is however preferred to enable sequenced opening and closing. Also, while two panels would bring an improvement compared to a single panel, three panels is the preferred option for containers intended to carry small parcels. According to the preferred and illustrated three-panel embodiment, a horizontal hinge 117 connects the bottom edge of the second panel 120 to the top edge of the vertically hinged third panel 130. In this context the word *hinge* should be construed broadly to cover not only traditional interlocking steel elements but also plastic hinges as well as strips of pliable material, such as fabric, leather, string, etc., connecting the panels in an articulated manner and creases or similar material deformations or living hinges enabling pivoting action between panels. This double-hinge setup enables the door 100 to be opened and closed either by opening the entire door about the vertical hinge 118 or by opening first the second panel 120 about the horizontal hinge 117 and then the third panel 130 about the vertical hinge 118. The same hinge principle applies to the first panel 110. A horizontal hinge 117 connects the bottom edge of the first panel 110 to the top edge of the second panel 120. The two panels 110, 120 are similar in construction, whereby the first panel 110 is now discussed in greater detail. It is also possible to manufacture the panels 110, 120 as one integral piece by extrusion or injection molding and by including a living hinge there between.

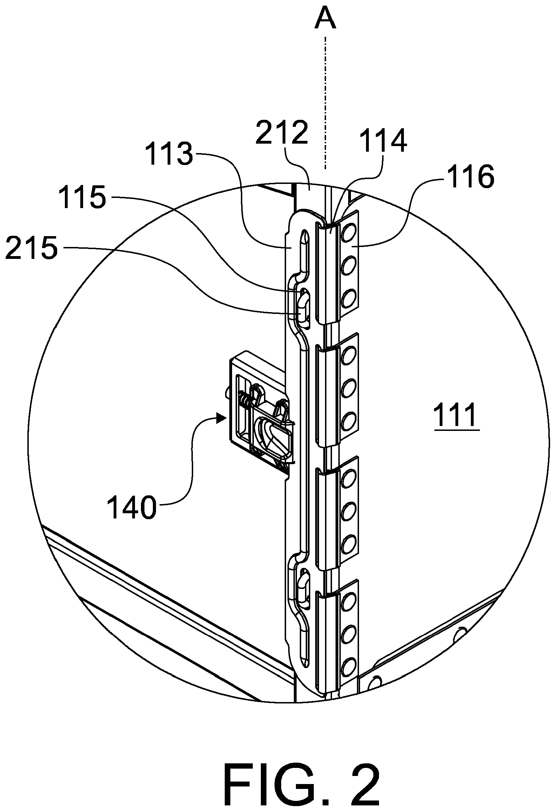

FIGURE 1 shows that the first panel 110 extends across the open end of the enclosure 200. The first panel 110 comprises a cover 111 which is preferably frameless to save weight. The cover 111 may, for example, be made of plastic, preferable translucent plastic, hollow double-walled panels, composites, metal, cellular board, impregnated fabric, etc. Alternatively, the panel may comprise a framed cover 111 with lightweight material, such as fabric, provided across the frame. FIGURE 2 reveals the closing mechanism for securing the closed panel 110 to the enclosure 200. Firstly it is noted that the cover 111 is dimensioned such that, when closed, the peripheral edge rests against the vertical member 212 of the frame 211 of the first wall 210. Secondly it is noted that the panel 110 has been provided with an articulated extension 113. The extension 113 is preferably manufactured of a relatively rigid material such as metal, plastic, composite, or similar. In the shown example the material is metal, more specifically aluminium. The extension 113 is connected to the cover 111 through a hinge 114 which provides a articulation axis MA for the extension 113 in respect to the cover 111. In the shown example the articulation axis MA is vertical as the extension 113 is intended to flank the side of the enclosure 200. The orientation of the articulation axis MA is not, however, fixed. If, for example, the enclosure featured a top wall (not shown), the articulation axis MA could be horizontal. The hinge 114 may be a strip of pliable material, a cooperating pair of cooperating elements provided to the extension 113 and cover 114, are linkage, or similar. According to an unillustrated example, the extension could be formed from the same material as the cover and act as a pivoting flap similar to cardboard boxes. In the preferred and illustrated example, the extension 113 is made of metal to form a strong bond with the enclosure 200. The hinge 114 is connected to the cover 111 through a fastener 116. The fastener 116 may be a riveted metal plate or any other suitable means for fastening the hinge 114.

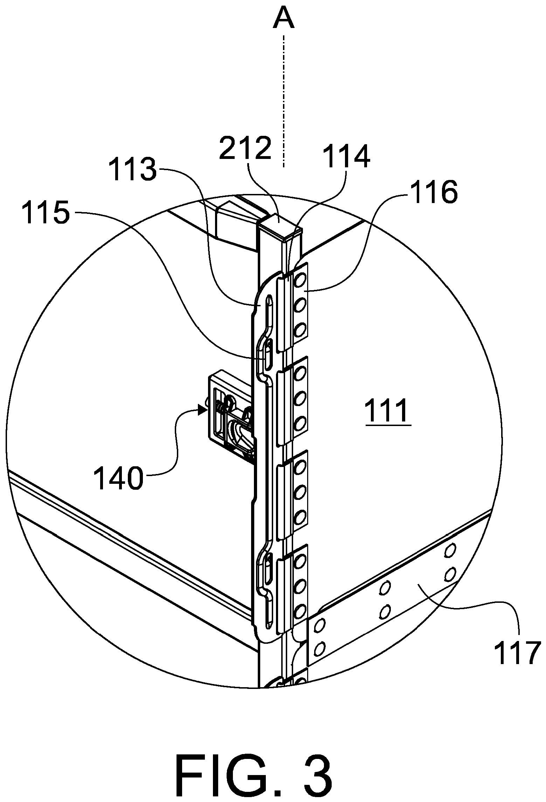

Turning now to the details of the extension 113 and the connection between the extension 113 and the enclosure 200 when the door 100, particularly the panel 110, is closed. As best seen from FIGURE 2, the extension 113 lies against the side of the enclosure 200, when the panel 110 is closed and secured, i.e. it is in a flanking position. More specifically, the extension 113 lies against the lateral face of the vertical element 121. This lateral face is adjacent to the frontal face of the vertical element 121 against which the cover 111 lies. The hinge 114 has assumed a position on the edge between the frontal and lateral face of the vertical element 121. As may also be seen, the extension 113 features an opening 115. The opening 115 is also clearly visible in FIGURE 3 which shows the elongated shape of the opening 115 in greater definition. In the illustrated example the extension 113 features two openings 115 which are spaced apart and located at each end of the extension 113. The purpose of the opening 115 is to form the first counterpart of a translation restraint mechanism which prevents the extension 113 from moving along the side of the enclosure 200. The other counterpart of the translation restraint mechanism is a cooperating protrusion 215 extending from the enclosure 200, more specifically from the first wall 210, particularly from the lateral face of the vertical element 212 of the frame 211. The protrusion 215 may, as illustrated, take the form of a bent metal wire. The protrusion 215 is in any case shaped and dimensioned, i.e. configured, to fit into the opening 115 of the extension 113. When the connection between the counterparts 115 and 215 is formed, movement of the extension 113 is prevented along the enclosure 200. This means that the up and down as well as front to back movement is restrained. In other words, the translation restraint mechanism 115, 215 prevents translation of the extension in a direction or in directions which is/are perpendicular to the articulation axis MA of the extension 113.

Generally speaking, the panels 110, 120 are dimensioned to cover the open end of the enclosure 200, the extension 113 is dimensioned to extend past the edges of the open end and to flank the enclosure.

Naturally, the male and female cooperation between the extension 113 and the enclosure 200 could be reversed to create an alternative translation restraint mechanism. In the unillustrated embodiment the extension would feature a protrusion and the enclosure would feature a cooperating opening. Also, the extension could make do with only one opening or the extension could feature more than two openings. While the lateral translation mechanism may take several different forms it is, however, worthwhile to point out that the counterparts are fixed to the respective elements. By omitting moving mechanisms, such as slides etc., the mated counterparts form a very robust connection. In the illustrated example, the looped metal wire forms a very strong protrusion which may assume great impacts in directions perpendicular to the articulation axis MA.

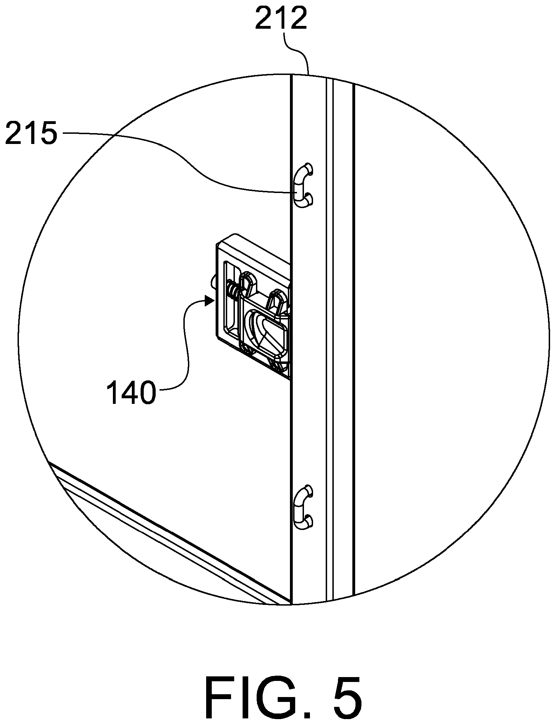

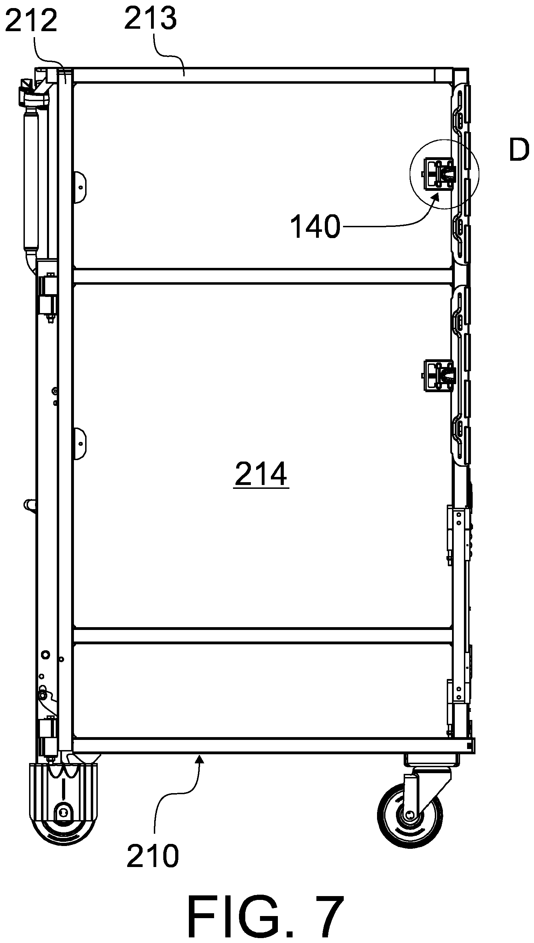

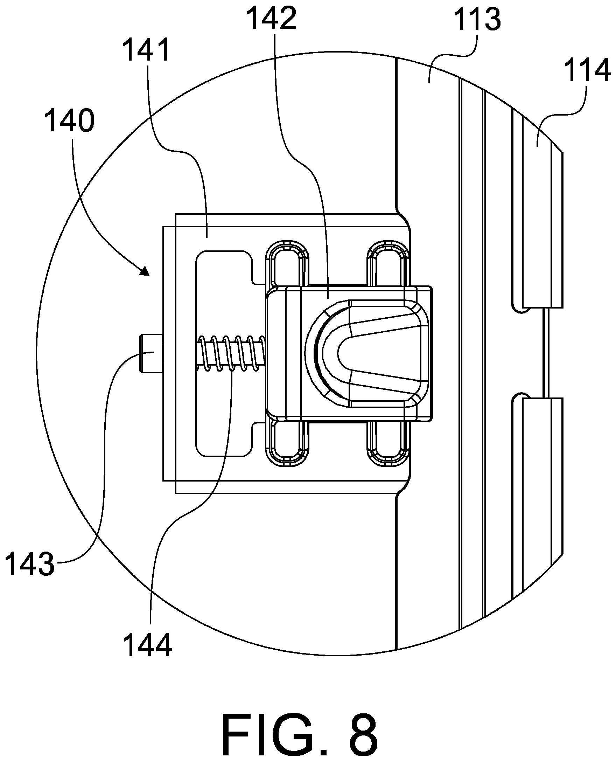

FIGURE 2 also shows the purpose of the second mechanism for keeping the panel 110 closed, namely the rotation restraint mechanism 140. The same content may be found from FIGURE 8 which is a detail view of area D of FIGURE 7 which shows the container 1000 in side elevation view. FIGURE 8 depicts the rotation restraint mechanism 140 in a deployed state in which the rotation restraint mechanism 140 prevents the extension from opening, i.e. from rotating about the articulation axis MA. The rotation restraint mechanism 140 includes a case 141 which is attached to the enclosure 200. More specifically, the case 141 is attached to the frame 211 of the wall 210. As is best seen from FIGURE 5, the rotation restraint mechanism 140 is provided to a space defined by the vertical and horizontal elements 212, 213 of the frame 211 so as to be protected from lateral impacts by said frame 211. This adds to the robustness of the container 1000.

The case 141 is preferably hollow to accommodate the moving parts of the rotation restraint mechanism 140. The primary moving part is the latch 142 which is used to engage and hold the extension 113. The latch 142 may be operated in several foreseeable ways to between a deployed state, in which the latch 142 engages the extension 113, and retracted state in which the latch 142 is disengaged from the extension 113. In the illustrated example, the latch 142 is fitted slidably to the case 141, specifically to the hollow inner space of the case 141. Alternatively (not shown), the latch could be pivoted about an axis or removably inserted into a receiving holder to wedge the extension against the enclosure. Due to the movable nature of the latch 142, the rotation restraint mechanism 140 is releasable. The latch 142 is connected to the case 141 by a screw 143. The screw 143 extends through a hole in the case 141 in a sliding fit and is fixed to the latch 142. A biasing element 144 is provided between the case 141 and the latch 142 to bias the latch 142 towards the deployed state, i.e. towards the open end of the enclosure 200. The biasing element 144 may take the form of a coil spring arranged over the screw 143.

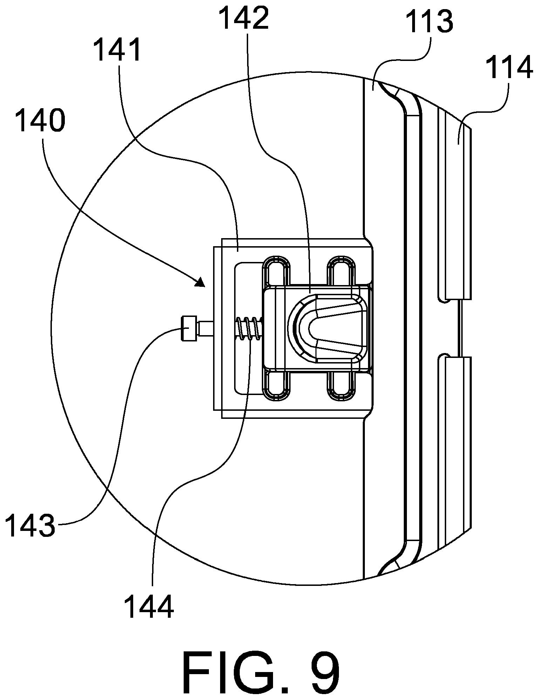

When the rotation restraint mechanism 140 is in the deployed state (FIGURE 8), the latch 142 extends over the extension 113. The latch 142 is maintained in the deployed state by the biasing element 144 which urges the latch 142 to a proximal position in respect to the open end of the enclosure 200. This prevents the extension 113 from turning. When the rotation restraint mechanism 140 is in a released state (FIGURE 9), the latch 142 is retracted against the biasing force of the biasing element 144 towards a distanced position in respect to the open end of the enclosure 200 and disengaged from the extension 113 enabling the rotation thereof. The movement of the latch 142 is thus arranged to occur towards and away from the open end of the container. The case 141 therefore facilitates sliding movement of the latch 142 in a direction perpendicular to the articulation axis MA of the extension 113. It is to be noted that because the forces causing the extension 113 from turning are relatively small, the rotation restraint mechanism 140 may include moving parts. These moving parts, including the latch 142, may include plastic or other fairly fragile parts. Also, the force required to operate the rotation restraint mechanism 140 may be fairly low. This is particularly beneficial in constructing a light and easy to use container. It is also noted that the biasing element 144 serves the purpose of improving the usability of the container 1000. When the latch 142 is in the deployed state, the extension 113 may be slid under the latch 142 without separately manipulating the latch 142. When the extension 113 is pushed towards vertical element 212 of the frame 211, the extension 113 makes contact with the bevelled front edge of the latch 142. With the bevelled leading edge narrowing towards the open end of the container 1000, the extension 113 moving towards the vertical element 212 cocks the latch 142 towards the released state. As soon as the extension 113 as assumed the deployed state, where it no longer urges the latch 142 towards the released state, the latch 142 is free to return to the deployed state propelled by the biasing element 144 to lay on top of the extension 113.

Another way of viewing the degrees of freedom of the extension 113 would be to consider the translation restraint mechanism 115, 215 as preventing the translation of extension 113 in two Cartesian dimensions, when the mechanism 115, 215 is deployed, and allowing translation in a third Cartesian dimension at all times. The former two Cartesian dimensions would define a plane perpendicular to the plane of the open end of the container 1000. Accordingly, the articulation axis MA would be parallel to either of the former two Cartesian dimensions. Following the same view, the rotation restraint mechanism 140 would prevent translation of the extension 113 of the door 100 in a third Cartesian dimension when engaging the extension 113 of the door 100. In other words, the translation of the extension 113 of the door 100 in the third Cartesian dimension would occur about the articulation axis MA.

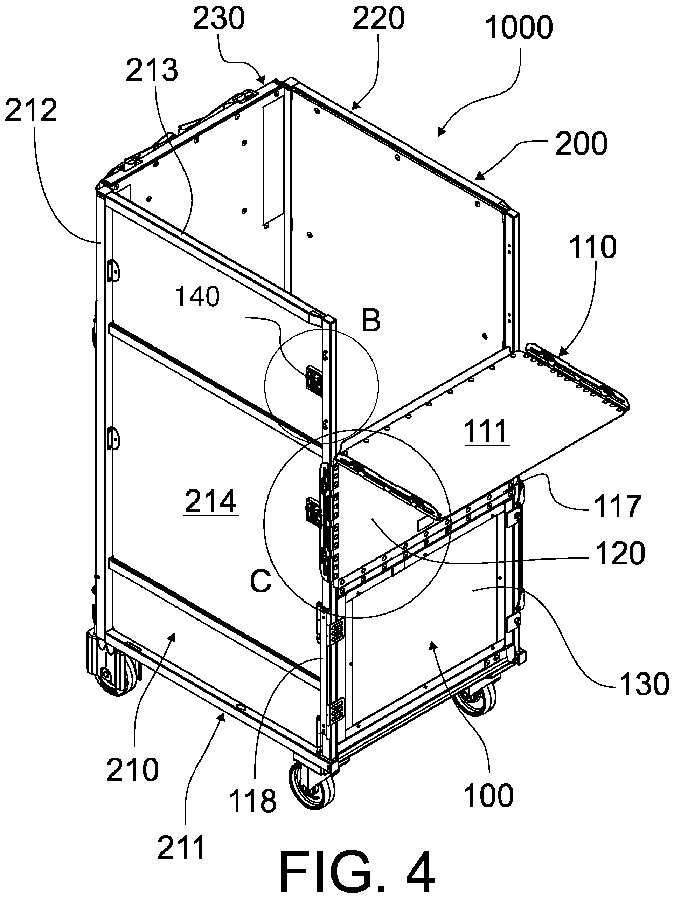

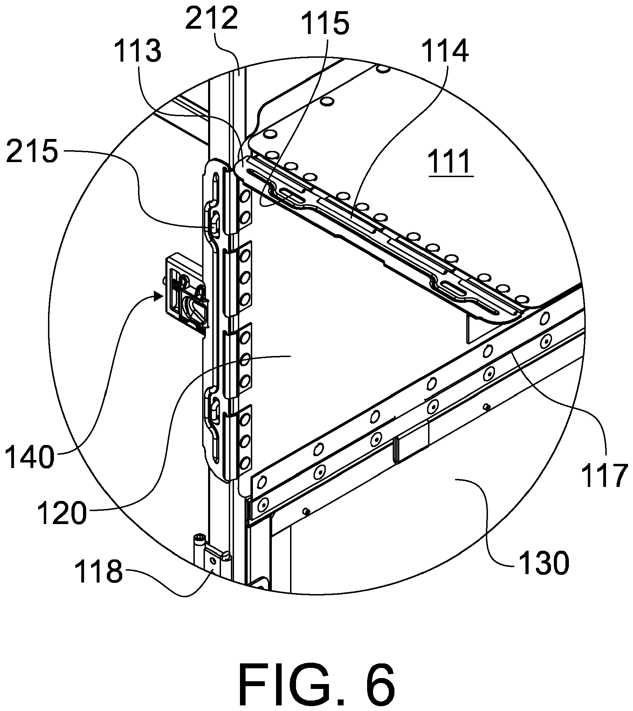

The use of the container 1000 is simple. The opening procedure starts with releasing the rotation restraint mechanisms 140 on both sides of of the first panel 110 by pushing the latches 142 towards the distanced position in respect to the open end of the enclosure. When the pushing force exceeds the biasing force of the biasing element 144, the latch 142 is retracted and disengaged from the extension 113 (FIGURE 9). With the latch 142 disengaged, the extension 113 is free to rotate about the articulation axis MA. The extensions 113 are then rotated about the respective manipulation axes, wherein the counterparts of the translation restraint mechanism 115, 215 - i.e. the opening 115 and protrusion 215 on the extension 113 and enclosure 200 - become detached thus allowing the extension 113 to slide off the flanking state (FIGURE 3). Now the first panel 110 is free to turn about the horizontal hinge 117 (FIGURES 4 and 6) over and on top of the second panel 120. With the top panel open, the operator can access the contents of the top part of the inner volume of the container 1000. To gain access to the middle part of the inner volume of the container 1000, the same procedure is repeated on the second panel 120 after which both panels 110, 120 are folded onto the third panel 130. The door 100 may be completely opened by turning the third panel 130 about the vertical hinge 118. The turning may require release of a separate holding mechanism for holding the third panel 130 closed (not shown). The door 100 is closed by performing the above-described steps in reverse.

It is to be understood that the embodiments of the invention disclosed are not limited to the particular structures, process steps, or materials disclosed herein, but the invention is defined by the appended claims.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

**REFERENCE SIGNS LIST**

| No. | Element | No. | Element |
|---|---|---|---|
| 100 | door | 142 | slide |
| 110 | first panel | 143 | screw |
| 111 | cover | 144 | biasing spring |
| 112 | hinge | 200 | enclo sure |
| 113 | extension | 210 | first wall |
| 114 | hinge | 211 | frame |
| 115 | opening, female counterpart | 212 | vertical element |
| 116 | fastener | 213 | horizontal element |
| 117 | horizontal hinge | 214 | cover |
| 118 | vertical hinge | 215 | protrusion, male counterpart |
| 120 | second panel | 220 | second wall |
| 130 | third panel | 230 | third wall |
| 140 | retainer | A | articulation axis |
| 141 | case | | |

## Claims

1. A container (1000) comprising:
- an enclosure (200) comprising at least three lateral ends and
- a door (100) movably connected to the enclosure (200) for closing and opening one of the three lateral ends of the enclosure (200), the door (100) comprising an extension (113) which is configured to be articulated in respect to the door (100) about an articulation axis (A) to extend along another lateral end of the at least three lateral ends of the enclosure (200) when the door (100) is closed,
- a translation restraint mechanism (115, 215) comprising:
∘ a first counterpart (115) provided to the extension (113) of the door (100) and
o a second counterpart (215) provided to the enclosure (200), which second counterpart (215) is configured to cooperate with the first counterpart (115) such to prevent translation movement of the extension (113) of the door (100) in a direction perpendicular to the articulation axis (A), when the first and second counterparts (115, 215) are engaged, and to allow the translation movement, when the first and second counterparts (115, 215) are disengaged, and
- a rotation restraint mechanism (140) being configured to engage the extension (113) of the door (100) in a deployed state, in which the rotation restraint mechanism (140) is configured to prevent the rotation of the extension (113) about the articulation axis (A).

2. The container (1000) according to claim 1, wherein the door (100) comprises:
- a first panel (110) and
- a second panel (120) connected to the first panel (110) through a horizontal hinge (117) which is configured to provide for rotation between the first and second panel (110, 120) for sequential closing and opening of the door.

3. The container (1000) according to claim 2, wherein the extension (113) is provided to the first panel (110) or the second panel (120) or both, preferably to the edge of the panel.

4. The container (1000) according to any one of the preceding claims, wherein the articulated extension (113) is configured to be manipulated about the articulation axis (A) between:
- a deployed state, in which the extension (113) extends along a lateral end adjacent to the lateral end closed by the door (100), and
- a released state, in which the extension (113) is distanced from the adjacent lateral end of the enclosure (200).

5. The container (1000) according to any one of the preceding claims, wherein the door (100) comprises a third panel (130) connected to the second panel (120) through a horizontal hinge (117), wherein a hinge (118), preferably a vertical hinge (118), is provided to the third panel (130).

6. The container (1000) according to any one of the preceding claims 2 to 5, wherein the first and second panel (110, 120) are both equipped with extensions (130) on both lateral edges and with cooperating translation and rotation restraint mechanisms (115, 215; 140).

7. The container (1000) according to any one of the preceding claims, wherein the first counterpart (115) and the second counterpart (215) are fixed to the extension (113) and enclosure (200), respectively.

8. The container (1000) according to any one of the preceding claims, wherein:
- the first counterpart (115) is an opening and
- the second counterpart (215) is a cooperating protrusion extending in a direction perpendicular to the articulation axis (A) of the extension (113) of the door (100).

9. The container (1000) according to any one of the preceding claims, wherein the rotation restraint mechanism (140) comprises a latch (142) which is configured to be manipulated between:
- an engaged state, in which the latch (142) engages the extension (113) for preventing rotation about the articulation axis (A), and
- a released state, in which the latch (142) is disengaged from the extension (113) for allowing rotation about the articulation axis (A).

10. The container (1000) according to claim 9, wherein the rotation restraint mechanism (140) comprises a case (141) which is attached to the enclosure (200) and which case (141) carries the latch (142) in a movable fashion and facilitates movement between the engaged and released state, which movement is preferably sliding movement of the latch (142) in a direction perpendicular to the articulation axis (A) of the extension (113).

11. The container (1000) according to claim 9 or 10, wherein:
- in the engaged state, the latch (142) covers the extension (113) of the door (100) at least partially and is at a proximal position in respect to the open end of the enclosure (200) and,
- in the released state, the latch (142) does not cover the extension (113) of the door and is at a distanced position in respect to the open end of the enclosure (200).

12. The container (1000) according to claim 10 or 11, wherein the rotation restraint mechanism (140) comprises a biasing element (144) which connects the latch (142) to the case (141) for biasing the latch (142) towards the proximal position.

13. The container (1000) according to any one of the preceding claims, wherein at least one of the walls of the enclosure (200) comprises a frame (211) comprising interconnected vertical elements (212) and horizontal elements (213), wherein the rotation restraint mechanism (140) is provided to a space defined by the vertical and horizontal elements (212, 213) of the frame (211) so as to be protected from lateral impacts by said frame (211).

## Patentansprüche

1. Behälter (1000), umfassend:
- eine Einfassung (200), die mindestens drei Seitenenden umfasst, und
- eine Tür (100), die bewegbar mit der Einfassung (200) zum Schließen und Öffnen eines der drei Seitenenden der Einfassung (200) verbunden ist, wobei die Tür (100) eine Verlängerung (113) umfasst, die dazu ausgelegt ist, in Bezug auf die Tür (100) um eine Gelenkachse (A) angelenkt zu werden, um sich entlang eines anderen Seitenendes der mindestens drei Seitenenden der Einfassung (200) zu erstrecken, wenn die Tür (100) geschlossen ist,
- einen Verschiebungsbeschränkungsmechanismus (115, 215), umfassend:
- ein erstes Gegenstück (115), das an der Verlängerung (113) der Tür (100) bereitgestellt ist, und
- ein zweites Gegenstück (215), das an der Einfassung (200) bereitgestellt ist, wobei das zweite Gegenstück (215) dazu ausgelegt ist, mit dem ersten Gegenstück (115) derart zusammenzuwirken, dass Verschiebungsbewegung der Verlängerung (113) der Tür (100) in einer Richtung senkrecht zur Gekenkachse (A) verhindert wird, wenn das erste und zweite Gegenstück (115, 215) in Eingriff stehen, und Verschiebungsbewegung zu erlauben, wenn das erste und zweite Gegenstück (115, 215) gelöst sind, und
- einen Drehungsbeschränkungsmechanismus (140), der dazu ausgelegt ist, in die Verlängerung (1113) der Tür (100) in einem eingesetzten Zustand einzugreifen, wobei der Drehungsbeschränkungsmechanismus (140) dazu ausgelegt ist, die Drehung der Verlängerung (113) um die Gelenkachse (A) zu verhindern.

2. Behälter (1000) nach Anspruch 1, wobei die Tür (100) umfasst:
- eine erste Tafelung (110) und
- eine zweite Tafelung (120), die mit der ersten Tafelung (110) durch ein horizontales Scharnier (117) verbunden ist, das dazu ausgelegt ist, Drehung zwischen der ersten und der zweiten Tafelung (110, 120) für aufeinanderfolgendes Schließen und Öffnen der Tür bereitzustellen.

3. Behälter (1000) nach Anspruch 2, wobei die Verlängerung (113) an der ersten Tafelung (110) oder der zweiten Tafelung (120) oder beiden bereitgestellt ist, vorzugsweise am Rand der Tafelung.

4. Behälter (1000) nach einem der vorstehenden Ansprüche, wobei die angelenkte Verlängerung (113) dazu ausgelegt ist, um die Gelenkachse (A) gehandhabt zu werden zwischen:
- einem eingesetzten Zustand, bei dem sich die Verlängerung (113) entlang eines Seitenendes erstreckt, das an das von der Tür (100) geschlossene Seitenende angrenzt, und
- einem gelösten Zustand, bei dem die Verlängerung (113) von dem angrenzenden Seitenende der Einfassung (200) beabstandet ist.

5. Behälter (1000) nach einem der vorstehenden Ansprüche, wobei die Tür (100) eine dritte Tafelung (130) umfasst, die durch ein horizontales Scharnier (117) mit der zweiten Tafelung (120) verbunden ist, wobei ein Scharnier (118), vorzugsweise ein vertikales Scharnier (118), an der dritten Tafelung (130) bereitgestellt ist.

6. Behälter (1000) nach einem der Ansprüche 2 bis 5, wobei sowohl die erste als auch die zweite Tafelung (110, 120) mit Verlängerungen (130) an beiden Seitenrändern und mit zusammenwirkenden Verschiebe- und Drehungsbeschränkungsmechanismen (115, 215; 140) ausgestattet sind.

7. Behälter (1000) nach einem der vorstehenden Ansprüche, wobei das erste Gegenstück (115) und das zweite Gegenstück (215) an der Verlängerung (113) bzw. der Einfassung (200) befestigt sind.

8. Behälter (1000) nach einem der vorstehenden Ansprüche, wobei:
- das erste Gegenstück (115) eine Öffnung ist, und
- das zweite Gegenstück (215) ein zusammenwirkender Vorsprung ist, der sich in einer Richtung senkrecht zur Gelenkachse (A) der Verlängerung (113) der Tür (100) erstreckt.

9. Behälter (1000) nach einem der vorstehenden Ansprüche, wobei der Drehungsbeschränkungsmechanismus (140) eine Lasche (142) umfasst, die dazu ausgelegt ist, gehandhabt zu werden zwischen:
- einem eingesetzten Zustand, bei dem die Lasche (142) zur Verhinderung von Drehung um die Gelenkachse (A) in die Verlängerung (113) eingreift, und
- einem gelösten Zustand, bei dem die Lasche (142) zum Erlauben von Drehung um die Gelenkachse (A) von der Verlängerung (113) gelöst ist.

10. Behälter (1000) nach Anspruch 9, wobei der Drehungsbeschränkungsmechanismus (140) ein Gehäuse (141) umfasst, das an der Einfassung (200) angebracht ist, und wobei das Gehäuse (141) die Lasche (142) auf bewegbare Weise trägt und Bewegung zwischen dem eingesetzten und gelösten Zustand erleichtert, wobei Bewegung vorzugsweise Gleitbewegung der Lasche (142) in einer Richtung senkrecht zur Gelenkachse (A) der Verlängerung (113) ist.

11. Behälter (1000) nach Anspruch 9 oder 10, wobei:
- in dem eingesetzten Zustand die Lasche (142) die Verlängerung (113) der Tür (100) zumindest teilweise verdeckt und in einer nahen Postion hinsichtlich des offenen Endes der Einfassung (200) ist, und
- in dem gelösten Zustand die Lasche (142) die Verlängerung (113) der Tür nicht verdeckt und in einer beabstandeten Postion hinsichtlich des offenen Endes der Einfassung (200) ist.

12. Behälter (1000) nach Anspruch 10 oder 11, wobei der Drehungsbeschränkungsmechanismus (140) ein Vorspannelement (144) umfasst, das die Lasche (142) zum Vorspannen der Lasche (142) zur nahen Position mit dem Gehäuse (141) verbindet.

13. Behälter (1000) nach einem der vorstehenden Ansprüche, wobei zumindest eine der Wände der Einfassung (200) einen Rahmen (211) umfasst, der untereinander verbundene vertikale Elemente (212) und horizontale Elemente (213) umfasst, wobei der Drehungsbeschränkungsmechanismus (140) an einem durch die vertikalen und horizontalen Elemente (212, 213) des Rahmens (212) definierten Raum derart bereitgestellt ist, dass dieser vor seitlichen Aufprällen durch den Rahmen (211) geschützt ist.

## Revendications

1. Conteneur (1000) comprenant :
- une enceinte (200) comprenant au moins trois extrémités latérales et
- une porte (100) reliée de manière mobile à l'enceinte (200) pour fermer et ouvrir l'une des trois extrémités latérales de l'enceinte (200), la porte (100) comprenant une extension (113) qui est configurée pour être articulée par rapport à la porte (100) autour d'un axe d'articulation (A) pour s'étendre le long d'une autre extrémité latérale des au moins trois extrémités latérales de l'enceinte (200) lorsque la porte (100) est fermée,
- un mécanisme de restriction de translation (115, 215) comprenant :
- une première contrepartie (115) fournie à l'extension (113) de la porte (100) et
- une seconde contrepartie (215) fournie à l'enceinte (200), laquelle seconde contrepartie (215) est configurée pour coopérer avec la première contrepartie (115) de manière à empêcher un mouvement de translation de l'extension (113) de la porte (100) dans une direction perpendiculaire à l'axe d'articulation (A), lorsque les première et seconde contreparties (115, 215) sont en prise, et à permettre le mouvement de translation, lorsque les première et seconde contreparties (115, 215) sont séparées, et
- un mécanisme de restriction de rotation (140) qui est configuré pour se mettre en prise avec l'extension (113) de la porte (100) dans un état déployé, dans lequel le mécanisme de restriction de rotation (140) est configuré pour empêcher la rotation de l'extension (113) autour de l'axe d'articulation (A).

2. Conteneur (1000) selon la revendication 1, dans lequel la porte (100) comprend :
- un premier panneau (110) et
- un deuxième panneau (120) relié au premier panneau (110) par le biais d'une charnière horizontale (117) qui est configurée pour assurer une rotation entre le premier et deuxième panneau (110, 120) pour une ouverture et une fermeture séquentielles de la porte.

3. Conteneur (1000) selon la revendication 2, dans lequel l'extension (113) est prévue sur le premier panneau (110) ou sur le deuxième panneau (120) ou les deux, de préférence sur le bord du panneau.

4. Conteneur (1000) selon l'une quelconque des revendications précédentes, dans lequel l'extension articulée (113) est configurée pour être manipulée autour de l'axe d'articulation (A) entre :
- un état déployé, dans lequel l'extension (113) s'étend le long d'une extrémité latérale adjacente à l'extrémité latérale fermée par la porte (100), et
- un état libéré, dans lequel l'extension (113) est éloignée de l'extrémité latérale adjacente de l'enceinte (200).

5. Conteneur (1000) selon l'une quelconque des revendications précédentes, dans lequel la porte (100) comprend un troisième panneau (130) relié au deuxième panneau (120) par le biais d'une charnière horizontale (117), dans lequel une charnière (118), de préférence une charnière verticale (118), est prévue sur le troisième panneau (130).

6. Conteneur (1000) selon l'une quelconque des revendications précédentes 2 à 5, dans lequel le premier et le deuxième panneau (110, 120) sont tous deux équipés d'extensions (130) sur les deux bords latéraux et de mécanismes de restriction de translation et de rotation (115, 215 ; 140) coopérants.

7. Conteneur (1000) selon l'une quelconque des revendications précédentes, dans lequel la première contrepartie (115) et la seconde contrepartie (215) sont fixées à l'extension (113) et à l'enceinte (200), respectivement.

8. Conteneur (1000) selon l'une quelconque des revendications précédentes, dans lequel :
- la première contrepartie (115) est une ouverture et
- la seconde contrepartie (215) est une saillie coopérante s'étendant dans une direction perpendiculaire à l'axe d'articulation (A) de l'extension (113) de la porte (100).

9. Conteneur (1000) selon l'une quelconque des revendications précédentes, dans lequel le mécanisme de restriction de rotation (140) comprend un verrou (142) qui est configuré pour être manipulé entre :
- un état en prise, dans lequel le verrou (142) se met en prise avec l'extension (113) pour empêcher une rotation autour de l'axe d'articulation (A), et
- un état libéré, dans lequel le verrou (142) est séparé de l'extension (113) pour permettre une rotation autour de l'axe d'articulation (A).

10. Conteneur (1000) selon la revendication 9, dans lequel le mécanisme de restriction de rotation (140) comprend un boîtier (141) qui est fixé à l'enceinte (200) et lequel boîtier (141) porte le verrou (142) d'une manière mobile et facilite le mouvement entre l'état en prise et l'état libéré, lequel mouvement est de préférence un mouvement coulissant du verrou (142) dans une direction perpendiculaire à l'axe d'articulation (A) de l'extension (113).

11. Conteneur (1000) selon la revendication 9 ou 10, dans lequel :
- dans l'état en prise, le verrou (142) couvre l'extension (113) de la porte (100) au moins partiellement et est à une position proximale par rapport à l'extrémité ouverte de l'enceinte (200) et,
- dans l'état libéré, le verrou (142) ne couvre pas l'extension (113) de la porte et est à une position éloignée par rapport à l'extrémité ouverte de l'enceinte (200).

12. Conteneur (1000) selon la revendication 10 ou 11, dans lequel le mécanisme de restriction de rotation (140) comprend un élément de contrainte (144) qui relie le verrou (142) au boîtier (141) pour contraindre le verrou (142) vers la position proximale.

13. Conteneur (1000) selon l'une quelconque des revendications précédentes, dans lequel au moins une des parois de l'enceinte (200) comprend une armature (211) comprenant des éléments verticaux (212) et des éléments horizontaux (213) reliés entre eux, dans lequel le mécanisme de restriction de rotation (140) est prévu dans un espace défini par les éléments verticaux et horizontaux (212, 213) de l'armature (211) de manière à être protégé de chocs latéraux par ladite armature (211).
